# EUROPÄISCHE PATENTANMELDUNG

(11) **EP 2 848 458 A1**
(43) Veröffentlichungstag der Anmeldung: **18.03.2015**
(21) Anmeldenummer: 13183910.2
(22) Anmeldetag: 11.09.2013
(51) Int. Cl.: B60M 1/18, B60M 3/04

(54) **Segmentgrenzenanordnung in einem sich längs erstreckenden Schleifleiternetzwerk**

(71) Anmelder: Siemens Aktiengesellschaft, 80333 München (DE)
(72) Erfinder: Linzmaier, Klaus-Peter, 73650 Winterbach (DE); Pflieger, Helmut, 82275 Emmering (DE)

(57) **Zusammenfassung**

Die Erfindung betrifft eine Segmentgrenzenanordnung (100) in einem sich längserstreckenden Schleifleiternetzwerk, umfassend,
ein erstes Schleifleitungssegment (10),
ein Zwischensegment (30),
ein zweites Schleifleitungssegment (20), welche hintereinander angeordnet sind,
wobei das erste und zweite Schleifleitungssegment (10,20) je einen ersten Leiter (11,21) und je einen zweiten Leiter (12,22) aufweisen, wobei an den ersten und den zweiten Leiter (11,12;21,22) des ersten bzw. des zweiten Schleifleitungssegmentes (10,20) je eine Versorgungsspannung für zumindest einen Teil eines Transportfahrzeuges (40) angeschlossen ist, wobei das Zwischensegment (30) einen ersten Zwischensegmentleiter (31) und einen zweiten Zwischensegmentleiter (32) aufweist, wobei
zwischen dem ersten Schleifleitungssegment (10) und dem Zwischensegment (30) eine die Leiter (11,12) und die Zwischensegmentleiter (31,32) isolierende erste Grenzline (G1) und zwischen dem Zwischensegment (30) und dem zweiten Schleifleitungssegment (20) eine die Zwischensegmentleiter (31,32) und die Leiter (21,22) isolierende zweite Grenzline (G2) angeordnet ist. Erfindungsgemäß ist vorgesehen, dass die erste und zweite Grenzline (G1,G2) als jeweils ein Schrägschnitt durch eine parallele Leitungsführung der Leiter (11,12,21,22) und der Zwischenleiter (31,32) angeordnet ist.

## Beschreibung

Die Erfindung betrifft eine Segmentgrenzenanordnung in einem sich längs erstreckenden Schleifleiternetzwerk, umfassend ein erstes Schleifleitungssegment, ein Zwischensegment, ein zweites Schleifleitungssegment, welche hintereinander angeordnet sind, wobei das erste und zweite Schleifleitungssegment je einen ersten Leiter und je einen zweiten Leiter aufweisen, wobei an den ersten und den zweiten Leiter des ersten bzw. des zweiten Schleifleitungssegmentes je eine Versorgungsspannung für zumindest einen Teil eines Transportfahrzeuges angeschlossen ist, wobei das Zwischensegment einen ersten Zwischensegmentleiter und einen zweiten Zwischensegmentleiter aufweist, wobei zwischen dem ersten Schleifleitungssegment und dem Zwischensegment eine die Leiter und die Zwischensegmentleiter isolierende erste Grenzline und zwischen dem Zwischensegment und dem zweiten Schleifleitungssegment eine die Zwischensegmentleiter und die Leiter isolierende zweite Grenzline angeordnet ist.

Im Sinne der Erfindung soll unter Schleifleiternetzwerk ein Schleifleiternetzwerk für ein Transportsystem oder ein Fördersystem mit automatisch gesteuerten Transportfahrzeugen verstanden werden, deren Aufgabe es ist, Material oder Personen zu transportieren. Beispielsweise ist eine Elektrohängebahn ein Transportsystem mit einem Schleifleiternetzwerk. Die Elektrohängebahn ist ein schienengebundenes Fördermittel mit einzeln angetriebenen Transportfahrzeugen. Die Transportfahrzeuge können sich autonom und unabhängig voneinander auf dem Schienensystem bewegen. Zur Kommunikation von festen Anlagenteilen mit Anlagenteilen der Transportfahrzeuge wird vorzugsweise ein Schleifleiternetzwerk benutzt, an welches eine Grundversorgungsspannung zur Versorgung, beispielsweise eines Modems in dem Transportfahrzeug, angeschlossen sein kann. Es kann auch nur ein Belastungswiderstand in dem Transportfahrzeug aus dieser Spannung gespeist werden. Hierdurch wird bei den Schleifleitungen erreicht, dass ein geringer Strom fließt, über den ein Oxidieren der Schleifleitungen erschwert wird.

Bei den Transportsystemen ist eine Transportbahn, beispielsweise ein Schienensystem, in Abschnitte unterteilt, vorzugsweise in Segmente, wobei sich auf diesen Segmenten die Transportfahrzeuge bewegen können. Damit das Verhalten und somit ein Fahrprofil eines Transportfahrzeuges innerhalb des Transportsystems, beispielsweise einer Produktionsanlage für den Automobilbau, den unterschiedlichen Fertigungsprozessen angepasst werden kann, ist eine Kommunikation zwischen einer zentralen Anlagensteuerung und den Transportfahrzeugen notwendig. Diese Kommunikation erfolgt vorzugsweise über das Schleifleiternetzwerk, wobei zwischen einem ersten Schleifleitungssegment und einem zweiten Schleifleitungssegment ein Zwischensegment angeordnet ist.

Am Beispiel einer Elektrohängebahn, welche auf einem Segment fährt und über Stromabnehmer ihre Datenkommunikation über entsprechende Datenstromschienen aufrecht erhält, kann es beim Übergang von einem Segment zu einem nächsten Segment vorkommen, dass der Stromabnehmer genau zwischen den beiden Segmenten einen Kurzschluss hervorruft.

In der EP 2 587 752 A1 wird ein Verfahren zum Datenaustausch zwischen einem Transport- und einem Fahrzeugsystem unter Verwendung einer besonderen Kommunikationsart vorgestellt, wobei entstehende Kurzschlüsse die Kommunikation nur geringfügig stören.

Es ist Aufgabe der vorliegenden Erfindung eine Anordnung für einen Übergang von einem Segment zu einem anderen Segment bereitzustellen, wobei die Anordnung das Übertragen von Kurzschlüssen von einem auf das andere Segment verhindert.

Die Aufgabe wird dadurch gelöst, dass bei der eingangs genannten Segmentgrenzenanordnung die erste und die zweite Grenzlinie als jeweils ein Schrägschnitt durch eine parallele Leitungsführung der Leiter und der Zwischensegmentleiter angeordnet sind. Es wird auch von einem Schienenschnitt gesprochen, bei dem die Datenschleifleiter annähernd auf der Länge eines Schleifkontaktes isoliert ausgeführt sind. Erfindungsgemäß ist die Anordnung der Zwischensegmentleiter in Bezug auf eine Symmetrielinie der parallelen Schienenführung in Form eines Parallelogramms ausgeführt.

Bei einer vorteilhaften Ausgestaltung wird die Segmentgrenzenanordnung dahingehend erweitert, dass sie ein erstes elektrisches Bauteil, ein zweites elektrisches Bauteil, ein drittes elektrisches Bauteil und ein viertes elektrisches Bauteil umfasst, wobei das erste, zweite, dritte und vierte elektrische Bauteil jeweils einen ersten Anschluss und einen zweiten Anschluss aufweisen und derart ausgestaltet sind, dass sie einen Stromfluss nur vom ersten Anschluss zum zweiten Anschluss zulassen, dabei ist das erste elektrische Bauteil mit seinem ersten Anschluss an dem ersten Leiter des ersten Schleifleitungssegmentes und mit seinem zweiten Anschluss an den ersten Zwischensegmentleiter angeschlossen, und das zweite elektrische Bauteil mit seinem ersten Anschluss an den ersten Leiter des zweiten Schleifleitungssegmentes und mit seinem zweiten Anschluss an den ersten Zwischensegmentleiter angeschlossen, und das dritte elektrische Bauteil mit seinem ersten Anschluss an den zweiten Zwischensegmentleiter und mit seinem zweiten Anschluss an den zweiten Leiter des zweiten Schleifleitungssegmentes angeschlossen, und das vierte elektrische Bauteil mit seinem ersten Anschluss an den zweiten Zwischensegmentleiter und mit seinem zweiten Anschluss an den ersten Leiter des ersten Schleifleitungssegmentes angeschlossen.

Als elektrische Bauteile werden vorzugsweise Halbleiterdioden verwendet. Mit dieser Verschaltung der Dioden wird das Zwischensegment zwischen den beiden Grenzlinien bzw. zwischen den beiden Schrägschnitten über jeweils zwei Dioden vor und hinter dem durch die beiden Schrägschnitte entstandenen Doppelschnitt verbunden. Je nach Polarität der Versorgungsspannungen für die Segmente, sind die Dioden so angeordnet, dass der Strom von dem angrenzenden Segment in das Zwischensegment hineinfließen kann oder aus dem Zwischensegment herausfließen kann. Unter Versorgungsspannung kann vorzugsweise auch eine Versorgungsspannung verstanden werden, wie sie bei einer Datenkommunikation, beispielsweise eine Powerline-Datenkommunikation mit einer OFDM/QPSK-Modulation verwendet wird. Demnach erfolgt eine Datenkommunikation mit gleichzeitiger Übertragung einer Versorgungsspannung von beispielsweise 48 V DC.

Will man nun die erfindungsgemäße Segmentgrenzenanordnung in einem weiteren Schritt dazu ertüchtigen, dass auch Daten über die Segmentgrenzenanordnung hinweg übertragen werden können, so ist jeweils zu jedem elektrischen Bauteil ein Koppelkondensator parallel geschaltet, welche ein Übertragen eines auf eine erste Versorgungsspannung des ersten Schleifleitungssegmentes aufmodulierten Signals auf das Zwischensegment und auf das zweite Schleifleitungssegment ermöglichen.

Eine weitere Ausgestaltung der Segmentgrenzenanordnung sieht vor, dass zur Anpassung einer Impedanz des Schleifleitungssegmentes an eine Impedanz des Zwischensegmentes die Kondensatoren jeweils einen Vorwiderstand aufweisen. Die Reihenschaltung aus Koppelkondensatoren und Widerständen parallel zu den Dioden hat den Vorteil, dass ein reproduzierbares Dämpfungsverhalten für Datensignale an den Segmentgrenzen eingestellt werden kann.

Bei Verwendung von beispielsweise Dioden mit großen Sperrschichtkapazitäten kann es darüber hinaus von Vorteil sein, jeweils in Serie zu den elektrischen Bauteilen, also zu den Dioden, eine Induktivität zur Impedanzanpassung zu schalten. Demnach werden in Serie zu den Dioden Filterelemente in Form von Spulen oder Ferriten ergänzt.

In der Zeichnung wird ein Ausführungsbeispiel einer Segmentgrenzenanordnung aufgezeigt. Es zeigt die
- FIG 1: eine Segmentgrenzenanordnung, welche versetzt zweimal geschnitten ist, die
- FIG 2: die aus FIG 1 bekannte Segmentgrenzenanordnung mit einer Erweiterung von Kondensatoren, Widerständen und Spulen zur Übertragung von aufmodulierten Kommunikationsdaten von einem Segment auf das andere Segment, die
- FIG 3: einen Stromweg beim Durchfahren eines Transportfahrzeuges in Fahrtrichtung durch die Segmente, die
- FIG 4: mögliche Stromwege, wenn sich das Transportfahrzeug im Zwischensegment befindet, die
- FIG 5: einen Stromweg, wenn sich das Fahrzeug aus dem Zwischensegment herausbewegt und die
- FIG 6: einen schematischen Überblick von Versorgungsbereichen über die Segmentgrenzenanordnung gesehen.

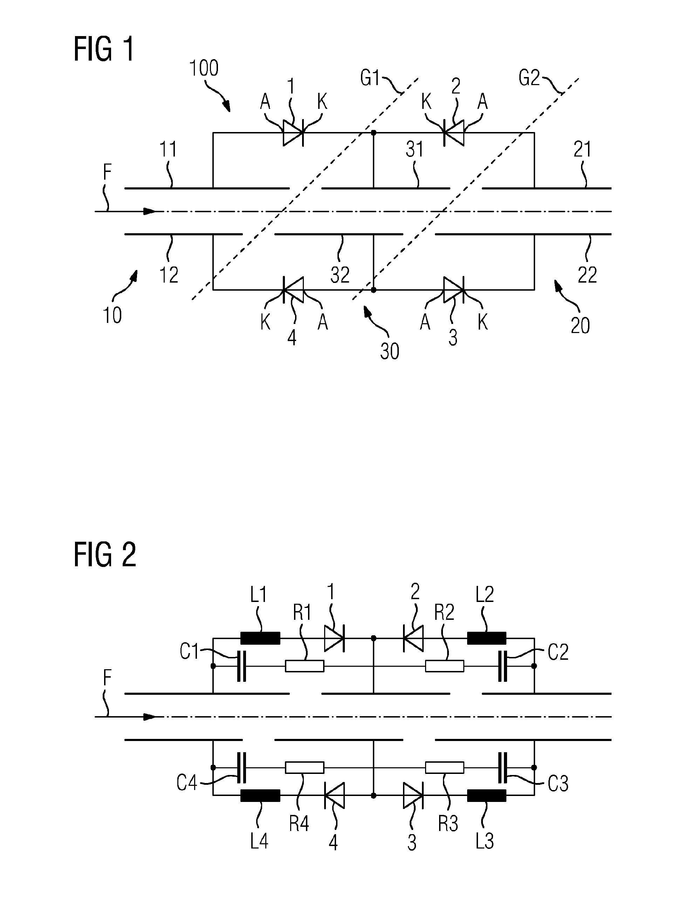

In FIG 1 ist eine Segmentgrenzenanordnung 100 in einem sich längs erstreckendem Schleifleiternetzwerk dargestellt. Ein erstes Schleifleitungssegment 10, ein Zwischensegment 30 und ein zweites Schleifleitungssegment 20 sind hintereinander angeordnet, so dass ein mögliches Transportfahrzeug die Segmente in einer Fahrtrichtung F durchfahren kann.

Das erste und zweite Schleifleitungssegment 10,20 weisen je einen ersten Leiter 11,21 und je einen zweiten Leiter 12,22 auf, wobei an den ersten und den zweiten Leiter 11,12;21,22 des ersten bzw. des zweiten Schleifleitungssegmentes 10,20 je eine Versorgungsspannung für ein Transportfahrzeug 40 angeschlossen ist.

Damit das Transportfahrzeug 40 ungehindert vom ersten Schleifleitungssegment 10 in das zweite Schleifleitungssegment 20 fahren kann, weist das Zwischensegment 30 einen ersten Zwischensegmentleiter 31 und einen zweiten Zwischensegmentleiter 32 auf.

Zwischen dem ersten Schleifleitungssegment 10 und dem Zwischensegment 30 ist eine die Leiter 11,12 und die Zwischensegmentleiter 31,32 isolierende erste Grenzlinie G1 angeordnet und zwischen dem Zwischensegment 30 und dem zweiten Schleifleitungssegment 20 ist eine die Zwischensegmentleiter 31,32 und die Leiter 21,22 isolierende zweite Grenzlinie G2 angeordnet. Die erste und die zweite Grenzlinie G1,G2 sind jeweils als ein Schrägschnitt durch eine parallele Leitungsführung der Leiter 11,12,21,22 und der Zwischenleiter 31,32 angeordnet. Demnach stellt sich die Anordnung der Zwischensegmentleiter in Form eines Parallelogramms dar.

Um zwar Kurzschlüsse zu vermeiden, aber dennoch ein Transportfahrzeug 40 beim Durchfahren der Segmentgrenze mit einer Versorgungsspannung zu versorgen, weist die Segmentgrenzenanordnung 100 weiterhin ein erstes elektrischen Bauteil 1, ein zweites elektrisches Bauteil 2, ein drittes elektrisches Bauteil 3 und ein viertes elektrisches Bauteil 4 auf, wobei die elektrischen Bauteile 1,2,3,4 jeweils einen ersten Anschluss A und einen zweiten Anschluss K aufweisen und derart ausgestaltet sind, dass sie einen Stromfluss nur vom ersten Anschluss A zum zweiten Anschluss K zulassen.

Das erste elektrische Bauteil 1 ist mit seinem ersten Anschluss A an den ersten Leiter 11 des ersten Schleifleitungssegmentes 10 und mit seinem zweiten Anschluss K an den ersten Zwischensegmentleiter 31 angeschlossen. Das zweite elektrische Bauteil 2 ist mit seinem ersten Anschluss A an den ersten Leiter 21 des zweiten Schleifleitungssegmentes 20 und mit seinem zweiten Anschluss K an den ersten Zwischensegmentleiter 31 angeschlossen. Das dritte elektrische Bauteil 3 ist mit seinem ersten Anschluss A an den zweiten Zwischensegmentleiter 32 und mit seinem zweiten Anschluss K an den zweiten Leiter 22 des zweiten Schleifleitungssegmentes 20 angeschlossen. Das vierte elektrische Bauteil 4 ist mit seinem ersten Anschluss A an den zweiten Zwischensegmentleiter 32 und mit seinem zweiten Anschluss K an den ersten Leiter 12 des ersten Schleifleitungssegmentes 10 angeschlossen.

Um vorzugsweise eine Übertragung von PROFINET-Signalen über die als Schleifleiter ausgestalteten Leiter zu ermöglichen, werden die ersten und zweiten Leiter eines jedes Segmentes als Kommunikationsschleifleiter für Daten und Versorgungsspannung genutzt. Die Daten sind dabei beispielsweise Powerline-Daten, vorzugsweise OFDM/ QPSK-modulierte Daten, die Versorgung erfolgt beispielsweise über 48 V DC. Um bei einer derartigen Kommunikationsart die Übertragung von Daten über Segmentsgrenzen hinaus zu ermöglichen, ist gemäß FIG 2 zu jedem elektrischen Bauteil 1,2,3,4 jeweils ein Koppelkondensator C1,C2,C3,C4 parallel geschaltet. Diese Parallelschaltung den ersten Koppelkondensators C1 zu dem ersten elektrischen Bauteil 1, des zweiten Koppelkondensators C2 zu dem zweiten elektrischen Bauteil 2, des dritten Koppelkondensators C3 zu dem dritten elektrischen Bauteil 3 und des vierten Koppelkondensators C4 zu dem vierten elektrischen Bauteil 4 ermöglicht ein Übertragen eines auf eine erste Versorgungsspannung des ersten Schleifleitungssegmentes 10 aufmodulierten Signals auf das Zwischensegment 30 und auf das zweites Schleifleitungssegment 20.

Zur Anpassung einer Impedanz des Schleifleitungssegmentes 10 an eine Impedanz des Zwischensegmentes 30 und umgekehrt, weisen die Koppelkondensatoren C1,C2,C3,C4 jeweils einen Vorwiderstand R1,R2,R3,R4 auf. Bei einer Ausführung der elektrischen Bauteile 1 bis 4 als Halbleiterdioden, können parallel zu den Dioden die Koppelkondensatoren C1,C2,C3,C4 oder allgemein gesprochen Hochfrequenzbauteile ergänzt werden über die die aufmodulierten Daten beider angrenzender Schienenabschnitte zueinander und auf das Zwischenstück übertragen werden.

In einer weiteren Optimierung im Hinblick auf die Impedanzanpassung werden parallel zu den Dioden Reihenschaltungen aus Koppelkondensatoren und Widerständen ergänzt. Hierdurch ergibt sich ein reproduzierbares Dämpfungsverhalten für die Datensignale. Bei einer Verwendung von Dioden mit großen Sperrschichtkapazitäten kann es darüber hinaus erforderlich sein, dass in Reihe zu den Dioden Filterelemente in Form von Spulen oder Ferriten ergänzt werden.

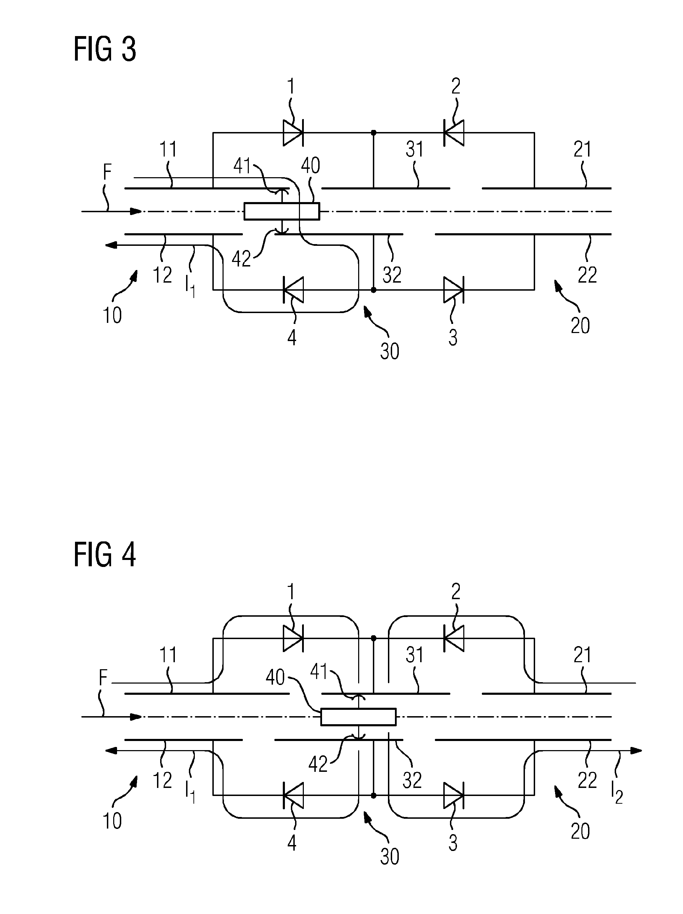

Die FIG 3 zeigt einen möglichen Strom eines Stromes I1 der ersten Versorgungsspannungsquelle beim Durchfahren des Transportfahrzeuges 40 durch die Segmentgrenzenanordnung 100 in Fahrtrichtung F. Das Transportfahrzeug 40 hat bereits das erste Schleifleitungssegment 10 teilweise verlassen. Das Transportfahrzeug 40 weist einen ersten Schleifkontakt 41, welcher jeweils mit einem ersten Leiter in Verbindung steht und einen zweiten Schleifkontakt 42, welcher jeweils mit einem zweiten Leiter des jeweiligen Segmentes in Verbindung steht, auf.

Bei einem Überfahren der ersten Grenzlinie G1 (s. FIG 1) des Transportfahrzeuges 40 befindet sich der erste Schleifkontakt 41 aufgrund des Schrägschnittes noch in Kontakt mit dem ersten Leiter 11 des ersten Schleifleitungssegmentes 10, der zweite Schleifkontakt 42 des Transportfahrzeuges 40 befindet sich bereits in Kontakt mit dem zweiten Zwischensegmentleiter 32 des Zwischensegmentes 30. Der Strom I1 der ersten Versorgungsspannungsquelle kann demnach über den ersten Leiter 11, über den ersten Schleifkontakt 41 in das Transportfahrzeug 40, und über den zweiten Schleifkontakt 42 aus dem Transportfahrzeug 40 in den zweiten Zwischensegmentleiter 32 des Zwischensegmentes 30 fließen. Durch die Überbrückung des zweiten Leiters 12 des ersten Schleifleitungssegmentes 10 und des zweiten Zwischenleiters 32 mit dem vierten elektrischen Bauteil 4, ausgeführt als eine Diode, kann der Strom I1 der ersten Versorgungsspannungsquelle über die Diode von dem zweiten Zwischensegmentleiter 32 in den zweiten Leiter 22 des ersten Schleifleitungssegmentes 10 zurück zur ersten Versorgungsspannungsquelle fließen.

Gemäß FIG 4 ist die Segmentgrenzenanordnung 100 mit dem Transportfahrzeug 40 zu einem späteren Zeitpunkt bezogen auf FIG 3 dargestellt. Das Transportfahrzeug 40 befindet sich nun mittlerweile im Zwischensegment 30. Über eine an das erste Schleifleitungssegment 10 angeschlossene Versorgungsspannung kann der Strom I1 der ersten Versorgungsspannungsquelle über das erste elektrische Bauteil 1 in den ersten Zwischensegmentleiter 31 fließen und von dort aus in den ersten Schleifkontakt 41 des Transportfahrzeuges 40 und über den zweiten Schleifkontakt 42 in den zweiten Zwischensegmentleiter 32 fließen, wobei er durch eine Brücke, gebildet aus dem vierten elektrischen Bauteil 4, zurück zu dem zweiten Leiter 12 des ersten Schleifleitungssegmentes 10 fließen kann. Ein ähnliches Bild ergibt sich für einen Strom I2 einer zweiten Versorgungsspannungsquelle, welcher an das zweite Schleifleitungssegment 20 angeschlossen ist. Der Strom I2 der zweiten Versorgungsspannungsquelle kann über den ersten Leiter 21 des zweiten Schleifleitungssegmentes 20 und über das zweite Bauteil 2 in den ersten Zwischensegmentleiter 31 des Zwischensegmentes 30 fließen, von dort aus kann der Strom I2 der zweiten Versorgungsspannungsquelle über die jeweiligen Schleifkontakte 41,42 zu dem zweiten Zwischensegmentleiter 32 fließen und über das dritte elektrische Bauteil 3 zurück über den zweiten Leiter 22 des zweiten Schleifleitungssegmentes zur zweiten Versorgungsspannungsquelle. Je nach Toleranzlage der beiden Versorgungsspannungsquellen fließt vorzugsweise der Strom I1 oder der Strom I2.

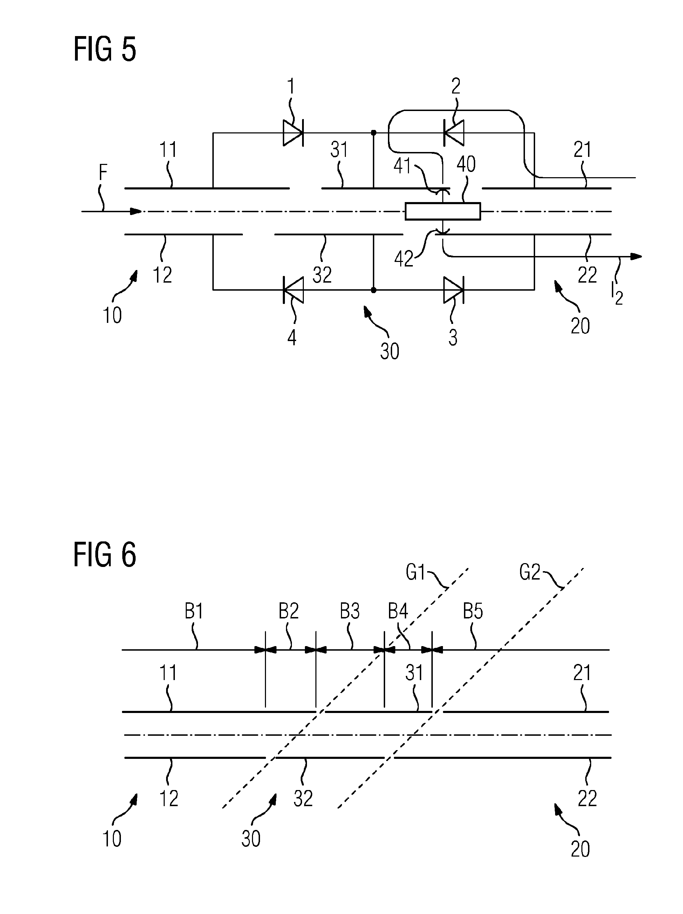

Bezogen auf das in Fahrt befindliche Transportfahrzeug 40 befindet essich zu einem weiteren späteren Zeitpunkt gemäß FIG 5 zwischen dem Zwischensegment 30 und dem zweiten Schleifleitungssegment 20, wobei aufgrund des Schrägschnittes bzw. der schräg angeordneten zweiten Grenzlinie G2 der erste Schleifkontakt 41 noch in Kontakt mit dem ersten Zwischensegmentleiter 31 ist und der zweite Schleifkontakt 42 bereits in Kontakt mit dem zweiten Leiter 22 des zweiten Schleifleitungssegmentes 20 ist. Aufgrund dieser Kontaktsituation der Schleifkontakte 41,42 kann nun der Strom I2 der zweiten Versorgungsspannungsquelle über das zweite elektrische Bauteil 2 noch in das Zwischensegment 30 fließen, nämlich in den ersten Zwischensegmentleiter 31 und von dort aus über den ersten Schleifkontakt 41 in das Transportfahrzeug 40 und von dort aus über den zweiten Schleifkontakt 42 in den zweiten Leiter 22 des zweiten Schleifleitungssegmentes 20. Behält das Transportfahrzeug 40 nun seine Fahrt aufrecht, so befindet sich anschließend das Transportfahrzeug 40 mit seinem ersten Schleifkontakt 41 und seinem zweiten Schleifkontakt 42 gänzlich in dem zweiten Schleifleitungssegment 20.

Mit der FIG 6 ist die Segmentgrenzanordnung 100 aus FIG 1 bis FIG 5 in Versorgungsbereiche unterteilt. Durch die schräg geschnittenen Leiter an der ersten Grenzlinie G1 und auch an der zweiten Grenzlinie G2 ergeben sich ein erster Versorgungsbereich B1, ein zweiter Versorgungsbereich B2, ein dritter Versorgungsbereich B3, ein vierter Versorgungsbereich B4 und anschließend ein fünfter Versorgungsbereich B5.

Der erste Versorgungsbereich B1 kann gänzlich dem ersten Schleifleitungssegment 10 zugeordnet werden, wobei die Versorgung des Transportfahrzeuges 40 ausschließlich aus der Versorgungsspannungsquelle des dem zugehörigen ersten Schleifleitungssegmentes 10 erfolgt.

Bei dem zweiten Versorgungsbereich B2 erfolgt die Versorgung des Transportfahrzeuges 40 zwar noch aus der ersten Versorgungsspannungsquelle, aber da sich ein Schleifkontakt 42 bereits in dem Zwischensegment 30 befindet, muss über das entsprechend der FIG 1 bis 5 dargestellte elektrische Bauteil 4 der Strom in das erste Schleifleitungssegment 10 zurückgeführt werden.

Ist das Transportfahrzeug 40 im dritten Versorgungsbereich B3 angekommen, so erfolgt je nach Toleranzlage der beiden Versorgungsspannungsquellen entweder eine Versorgung aus der ersten Versorgungsspannungsquelle oder aus der zweiten Versorgungsspannungsquelle.

Ist das Transportfahrzeug 40 in dem vierten Versorgungsbereich B4 angekommen, so erfolgt die Versorgung über die zweite Versorgungsspannungsquelle des zweiten Schleifleitungssegmentes 20. Die elektrischen Bauteile 1 bis 4 mit ihren stromrichtenden Eigenschaften sorgen wieder entsprechend der FIG 1 bis 5 dafür, dass der Strom zeitweise noch in das Zwischensegment bzw. aus dem Zwischensegment herausfließen kann.

Nach Überschreiten der zweiten Grenzlinie G2 und dem Fahren des Transportfahrzeuges 40 in dem fünften Versorgungsbereich B5 erfolgt die Versorgung des Transportfahrzeuges aus der zweiten Versorgungsspannungsquelle und die elektrischen Bauteile 1 bis 4 werden nun nicht mehr mit Strömen beaufschlagt.

Ein erheblicher Vorteil der Segmentgrenzenanordnung 100 ist, dass sich Fehler auf einer Seite der Schleifleitungssegmente, beispielsweise Kurzschlüsse der Schleifleiter oder Kurzschlüsse in Fahrzeugen auf dem Segment, sich beim Überfahren einer Segmentgrenze nicht auf das Nachbarsegment auswirken.

## Patentansprüche

1. Segmentgrenzenanordnung (100) in einem sich längserstreckenden Schleifleiternetzwerk, umfassend,
ein erstes Schleifleitungssegment (10),
ein Zwischensegment (30),
ein zweites Schleifleitungssegment (20), welche hintereinander angeordnet sind,
wobei das erste und zweite Schleifleitungssegment (10,20) je einen ersten Leiter (11,21) und je einen zweiten Leiter (12,22) aufweisen, wobei an den ersten und den zweiten Leiter (11,12;21,22) des ersten bzw. des zweiten Schleifleitungssegmentes (10,20) je eine Versorgungsspannung für zumindest einen Teil eines Transportfahrzeuges (40) angeschlossen ist, wobei das Zwischensegment (30) einen ersten Zwischensegmentleiter (31) und einen zweiten Zwischensegmentleiter (32) aufweist, wobei
zwischen dem ersten Schleifleitungssegment (10) und dem Zwischensegment (30) eine die Leiter (11,12) und die Zwischensegmentleiter (31,32) isolierende erste Grenzline (G1) und zwischen dem Zwischensegment (30) und dem zweiten Schleifleitungssegment (20) eine die Zwischensegmentleiter (31,32) und die Leiter (21,22) isolierende zweite Grenzline (G2) angeordnet ist,
**dadurch gekennzeichnet, dass** die erste und zweite Grenzline (G1,G2) als jeweils ein Schrägschnitt durch eine parallele Leitungsführung der Leiter (11,12,21,22) und der Zwischenleiter (31,32) angeordnet sind.

2. Segmentgrenzenanordnung (100) nach Anspruch 1, umfassend ein erstes elektrisches Bauteil (1),
ein zweites elektrisches Bauteil (2),
ein drittes elektrisches Bauteil (3),
ein viertes elektrisches Bauteil (4), wobei das erste, zweite, dritte und vierte elektrische Bauteil (1,2,3,4) jeweils einen ersten Anschluss (A) und einen zweiten Anschluss (K) aufweisen und derart ausgestaltet sind, das sie einen Stromfluss nur vom ersten Anschluss (A) zum zweiten Anschluss (K) zu lassen, dabei ist das
erste elektrische Bauteil (1) mit seinem ersten Anschluss (A) an den ersten Leiter (11) des ersten Schleifleitungssegments (10) und mit seinem zweiten Anschluss (k) an den ersten Zwischensegmentleiter (31) angeschlossen, und das zweite elektrische Bauteil (2) mit seinem ersten Anschluss (A) an den ersten Leiter (21) des zweiten Schleifleitungssegments (20) und mit seinem zweiten Anschluss (k) an den ersten Zwischensegmentleiter (31) angeschlossen, und das dritte elektrische Bauteil (3) mit seinem ersten Anschluss (A) an den zweiten Zwischensegmentleiter (32) und mit seinem zweiten Anschluss (K) an den zweiten Leiter (22) des zweiten Schleifleitungssegments (20) angeschlossen, und das vierte elektrische Bauteil (4) mit seinem ersten Anschluss (A) an den zweiten Zwischensegmentleiter (32) und mit seinem zweiten Anschluss (K) an den ersten Leiter (12) des ersten Schleifleitungssegments (10) angeschlossen.

3. Segmentgrenzenanordnung (100) nach Anspruch 1 oder 2, wobei das Zwischensegment eine Längenausdehnung aufweist, welche kleiner als eine Länge des Transportfahrzeuges (40) ist.

4. Segmentgrenzenanordnung (100), nach Anspruch 2 oder 3, wobei zu jedem elektrischen Bauteil (1,2,3,4) jeweils ein Koppelkondensator (C1,C2,C3,C4) parallel geschaltet ist, welche ein übertragen eines auf eine erste Versorgungsspannung des ersten Schleifleitungssegment (10) auf modulierten Signals auf das Zwischensegment (30) und auf das zweite Schleifleitungssegment (20) ermöglichen.

5. Segmentgrenzenanordnung (100), nach Anspruch 4, wobei zur Anpassung einer Impedanz des Schleifleitungssegmentes (10,20) an eine Impedanz des Zwischensegmentes (30) die Koppelkondensatoren (C1,C2,C3,C4) jeweils einen Vorwiderstand (R1,R2,R3, R4) aufweisen.

6. Segmentgrenzenanordnung (100), nach Anspruch 4 oder 5, wobei jeweils in Serie zu den elektrischen Bauteilen (1,2,3,4) eine Induktivität (L1,L2,L3,L4) zur Impedanzanpassung geschaltet ist.
